# EUROPÄISCHE PATENTSCHRIFT

(11) **EP 3 791 106 B1**
(45) Veröffentlichungstag und Bekanntmachung des Hinweises auf die Patenterteilung: **06.07.2022**
(21) Anmeldenummer: 19723048.5
(22) Anmeldetag: 02.05.2019
(51) Int. Cl.: F17C 5/06

(54) **VERFAHREN ZUM STEUERN EINES AUFTANKVORGANGES ZUM BEFÜLLEN EINER KRAFTSTOFFTANKEINRICHTUNG EINES KRAFTFAHRZEUGS MIT EINEM GASFÖRMIGEN KRAFTSTOFF, AUFTANKVORGANGPLANUNGSEINRICHTUNG, AUFTANKVORRICHTUNG, UND KRAFTFAHRZEUG**
METHOD FOR CONTROLLING A REFUELING PROCESS FOR FILLING A FUEL TANK DEVICE OF A MOTOR VEHICLE WITH A GASEOUS FUEL, REFUELING PROCESS PLANNING DEVICE, REFUELING DEVICE, AND MOTOR VEHICLE
PROCÉDÉ DE COMMANDE D'UNE OPÉRATION DE RAVITAILLEMENT EN CARBURANT SERVANT À REMPLIR UN RÉSERVOIR DE CARBURANT D'UN VÉHICULE AUTOMOBILE EN UN CARBURANT SOUS FORME GAZEUSE, SYSTÈME DE PLANIFICATION D'OPÉRATION DE RAVITAILLEMENT EN CARBURANT, DISPOSITIF DE RAVITAILLEMENT EN CARBURANT, ET VÉHICULE AUTOMOBILE

(30) Priorität: 04.07.2018 DE 102018210961
(43) Veröffentlichungstag der Anmeldung: 17.03.2021
(73) Patentinhaber: AUDI AG, 85045 Ingolstadt (DE)
(72) Erfinder: RAVINEL, Baptiste, 70327 Stuttgart (DE)
(74) Vertreter: Hentrich Patent- & Rechtsanwälte PartG mbB
(86) Internationale Anmeldenummer: PCT/EP2019/061258
(87) Internationale Veröffentlichungsnummer: WO 2020/007521

(56) Entgegenhaltungen:
- DE-A1-102014 226 959
- DE-T5-112010 003 119
- US-A- 5 628 349

## Beschreibung

Die Erfindung betrifft ein Verfahren zum Steuern eines Auftankvorganges zum Befüllen einer Kraftstofftankeinrichtung eines Kraftfahrzeugs mit einem gasförmigen Kraftstoff. Unter einer Kraftstofftankeinrichtung wird eine Vorrichtung oder eine Gruppe von Vorrichtungen verstanden, die zum Aufnehmen und Lagern des gasförmigen Kraftstoffs, zum Beispiel Wasserstoff, ausgestaltet ist, und zum Beispiel einen oder mehrere Kraftstofftanks aufweisen kann. Solch eine Kraftstofftankeinrichtung kann beispielsweise zusätzlich Leitungen zum Leiten des Kraftstoffs in den einen oder die mehreren Kraftstofftanks aufweisen.

Bei einer Betankung zum Beispiel eines Wasserstofftanks eines Brennstoffzellenfahrzeugs ("FCEV", "FCV") steigt die Gastemperatur im Tank. Unter Berücksichtigung von Sicherheitsfaktoren kann eine Betankung ohne Kommunikation des Kraftfahrzeugs mit der Tankstelle einen Füllgrad von nur bis circa 90 Prozent erreichen. Deswegen sind Brennstoffzellenfahrzeuge und Wasserstofftankstellen zum Beispiel mit einer Infrarotschnittstelle gebaut. Eine solche Infrarotschnittstelle erlaubt eine Kommunikation während der Betankung.

Eine beispielhafte Infrarotschnittstelle wird durch den Standard SAE J2799 beschrieben. Eine Betankung kann dann zum Beispiel durch das SAE J2601-Protokoll erfolgen, das die Kommunikation benutzt, um die Betankung zu einem höheren Füllgrad zu bringen. Die Tankstelle, genauer gesagt die Auftankvorrichtung, die das Befüllen vornimmt, bekommt als Information zu dem Kraftfahrzeug eine Information zu dem verfügbaren Restvolumen des Tanks, das aufgefüllt werden soll. Ein entsprechendes Übertragungsprotokoll beschreibt das Volumen und eine Leistungsmenge für alle möglichen Konfigurationen, und die Betankung erfolgt dann durch Simulation anhand einer Betankungstabelle (beispielsweise Übertragungsprotokoll J2601).

Durch die Simulation kann dann der Ablauf der Betankung oder der Befüllung optimiert werden, indem Auftankparameter ermittelt werden. Als Auftankparameter wird dabei ein Parameter verstanden, der eine Einstellung der Auftankvorrichtung zum Befüllen der Kraftstofftankeinrichtung und/oder eine Einstellung der Kraftstofftankeinrichtung beschreibt, beispielsweise eine Befüllgeschwindigkeit oder eine einzustellende Temperatur des Kraftstoffs oder eine Temperatur eines Leitungssystems. Mit anderen Worten werden die Auftankparameter im Stand der Technik abgeschätzt.

Bei beispielsweise einer Betankung mit Erdgas wird bisher auch nur ein aktueller Druck gemessen, und falls ein vorgegebener Maximaldruck erreicht wird, hört die Auftankvorrichtung automatisch auf zu betanken. Bei der Betankung mit einem Erdgas ist also in der Regel der Betankungsvorgang weniger genau als mit zum Beispiel Wasserstoff.

Eine bereitgestellte Information zu dem Tankvolumen gibt dabei im Stand der Technik dasjenige verbleibende Volumen im Kraftstofftank an, das noch mit dem gasförmigen Kraftstoff befüllt werden kann. Mit anderen Worten wird dadurch das Kraftstoffvolumen beschrieben, das noch aktuell in den Tank reinpasst.

Die US 2013/0139897 A1 beschreibt ein System und ein Verfahren zum Befüllen eines Tanks mit Wasserstoff anhand von Echtzeit-Wasserstoff-Tank-Ausdehnungsdaten.

Gemäß der DE 10 2015 204 373 A1 können für den Betankungsvorgang mit einem flüssigen Betriebsstoff zum Beispiel der Füllstand des Tanks und der aktuelle Stand eines Wegstreckenzählers berücksichtigt werden. Die Physik von Gasbetankung bringt jedoch andere Anforderungen an den Betankungsvorgang. Eine Tankstelle für ein unter Druck stehendes Gas ist durch die DE 10 2010 027 683 A1 beschrieben. Ein fahrzeugseitiger Rechner zur Berechnung des fahrzeugseitigen Befüllungsgrads und ein tankstellenseitiges Druckmessgerät in der Tankleitung sind dabei vorgesehen, wobei der tankstellenseitige Rechner aus einem Messwert des tankstellenseitigen Druckmessgeräts und mindestens einem Temperaturwert der anfänglichen SOC-Tankstelle berechnet und die Betankung mit der Information des tankstellenseitigen Druckmessgeräts bis zum Zieldruck oder Ziel-SOC-Tankstelle oder bis zu einem Abbruchsignal, das vom fahrzeugseitigen Rechner kommt, steuert.

Die US 5,628,349 B1 beschreibt ein System und ein Verfahren zum Dispensieren von unter Druck stehendem Gas, vor allem CNG, wobei die Temperatur innerhalb des empfangenen Tanks vorzugsweise überwacht wird.

Auch die DE102014226959A1 offenbart ein Verfahren zum Steuern eines Auftankvorganges.

Eine der Erfindung zugrunde liegende Aufgabe ist das Ermöglichen eines höheren Füllgrades bei der Betankung eines Kraftstofftanks mit einem gasförmigen Kraftstoff.

Die gestellte Aufgabe wird durch das erfindungsgemäße Verfahren und die erfindungsgemäßen Vorrichtungen gelöst. Vorteilhafte Weiterbildungen sind durch die Unteransprüche gegeben.

Die Erfindung basiert auf der Idee, die Ermittlung der Auftankparameter zum Durchführen des Auftankvorgangs in Abhängigkeit von einem Wert eines Ausgestaltungsparameters durchzuführen, wobei ein Ausgestaltungsparameter eine statische Eigenschaft der Kraftstofftankeinrichtung in Bezug auf dessen individuelle Ausgestaltung beschreibt. Mit anderen Worten wird nicht berücksichtigt, wie viel Kraftstoff aktuell noch in den Tank passt, sondern welche Geometrie und/oder welche Ausmaße die Kraftstofftankeinrichtung des zu betankenden Kraftfahrzeugs hat.

Solche statische Daten sind spezifisch für die Tanksystemgeometrie und Eigenschaften des Tanks. Die Daten sind einfach zu sichern und können ohne Fehler übertragen werden. Dadurch, dass zum Beispiel die Auftankvorrichtung alle Eigenschaften der Kraftstofftankeinrichtung des Kraftfahrzeugs kennt, kann die Betankung erst möglichst optimiert durchgeführt werden. Diese ergibt sich daraus, dass durch diese statischen Daten die Auftankparameter, also beispielsweise eine Geschwindigkeit der Befüllung oder eine Temperatur, bei der die Befüllung durchgeführt werden soll, exakt auf den spezifischen Tank des Kraftfahrzeugs abgestimmt werden können. Der Tankvorgang kann dadurch auch ohne dynamische Information, wie beispielsweise einen Tankdruck oder eine Temperatur des Tanks, durchgeführt werden.

Vorteilhaft kann mit den Tanksystem-Eigenschaften getankt werden, so schnell wie es das genaue Tanksystem erlaubt - was bisher wegen einer Sicherheitsmarge für verschiedene Tanksysteme nicht möglich war. Mit anderen Worten kann durch das erfindungsgemäße Verfahren und die erfindungsgemäßen Vorrichtungen eine Geschwindigkeit des Auftankvorgangs erhöht werden, wodurch sich die Betankungszeit reduziert.

Dadurch, dass zum Beispiel eine Temperatur des Kraftstoffs bestmöglich auf den individuellen Tank abgestimmt werden kann, kann eine Grenze der Tank-temperatur erst später erreicht werden, das heißt der Tankvorgang wird durch das vorzeitige Erreichen der Grenze der Tank-Temperatur nicht beendet, obwohl der Tank noch nicht voll ist. Durch die Erfindung kann also ein wesentlich höherer Füllgrad erreicht werden. Durch das Erreichen des höheren Füllgrades ergibt sich für das einzelne Kraftfahrzeug auch eine höhere Reichweite des Kraftfahrzeugs pro Tankvorgang. Mit den Tankssystem-Eigenschaften kann man zum Beispiel eine Wasserstoffvorkühlung justiert werden, um Betriebskosten zu sparen - was bisher nicht möglich war, wegen einer vorgegebenen Sicherheitsmarge mit einem festen Temperaturfenster. Mit festen (statischen) Eigenschaften und einer geringeren Abhängigkeit von dynamischen Werten kann man einen Füllgrad von 100% häufig erreichen, was bisher wegen Kommunikations-Fehlerfällen oder Ungenauigkeiten von dynamischen Werte nicht möglich war.

Je mehr Kraftfahrzeuge durch das erfindungsgemäße Verfahren oder mit Hilfe der erfindungsgemäßen Vorrichtungen an einer Tankstelle betankt werden, desto höher ist ein Gewinn für diese Tankstelle. Ein zusätzlicher Vorteil ist die Möglichkeit eine Tankstelle zu bauen, die optimal gewisse Fahrzeuge tanken kann und deswegen muss die Tankstelle nicht überdimensioniert werden. Man kann dann gewissen Kunden einen günstigeres und erweitertes Tankstellennetz anbieten. Eine Reduzierung des Kraftstoffpreises kann beispielsweise darauf basieren, dass mehrere Kraftfahrzeuge einer Kraftfahrzeugflotte oder eines Kraftfahrzeugherstellers an einer bestimmten Tankstelle tanken. Muss die Auftankvorrichtung weniger vorgekühlt werden, kann der Tankvorgang sehr viel schneller erfolgen und dadurch wird mehr Kundschaft angelockt.

Das erfindungsgemäße Verfahren zum Steuern eines Vorganges zum Befüllen einer Kraftstofftankeinrichtung, also das Verfahren zum Steuern eines Befüllvorgangs der Kraftstofftankeinrichtung eines Kraftfahrzeugs mit einem gasförmigen Kraftstoff, weist die folgenden, durch eine Auftankvorgangplanungseinrichtung durchgeführten Schritte auf. Unter einer Auftankvorgangplanungseinrichtung wird dabei ein Gerät, eine Gerätekomponente oder eine Gruppierung von Geräten verstanden, das/die zum Empfangen von Signalen und deren Auswertung eingerichtet ist, sowie zum Erzeugen von Steuersignalen. Die Auftankvorgangplanungseinrichtung kann dabei beispielsweise als Steuerplatine oder als Steuergerät ausgestaltet sein. Die Auftankvorgangplanungseinrichtung kann dabei zum Beispiel eine Komponente des Kraftfahrzeugs sein, oder der Auftankvorrichtung.

Der gasförmige Kraftstoff kann zum Beispiel Wasserstoff sein, oder Erdgas (CNG). Unter einer Auftankvorrichtung wird dabei ein Gerät oder eine Gerätegruppe zum Befüllen eines Tanks mit dem Kraftstoff verstanden, und die Auftankvorrichtung kann zum Beispiel ein Leitungssystem und eine Tanksäule umfassen.

Das erfindungsgemäße Verfahren ist dadurch gekennzeichnet, dass der Auftankparameter in Abhängigkeit von einem Ausgestaltungsparameter der Kraftstofftankeinrichtung angepasst oder vorgegeben wird. Hierzu erfolgt durch die Auftankvorgangplanungseinrichtung ein Empfangen eines Kraftstofftankparametersignals, das einen Wert eines Ausgestaltungsparameters beschreibt, der eine statische Eigenschaft der Kraftstofftankeinrichtung in Bezug auf dessen individuelle Ausgestaltung beschreibt. Das Kraftstofftankparametersignal kann zum Beispiel Abmessungen der Kraftstofftankeinrichtung und/oder eine Wandstärke der Kraftstofftankeinrichtung beschreiben, oder zum Beispiel ein Verhältnis einer Tanklänge zu einem Tankdurchmesser. Durch eine solche individuelle Analyse können dann die oben genannten Vorteile erreicht werden. Das Kraftstofftankparametersignal kann vorzugsweise aus einer Sendeeinrichtung des Kraftfahrzeugs empfangen werden, also aus einem Bauteil oder einer Gerätekomponente zum Senden von Signalen.

Ein Ermitteln des Auftankparameters erfolgt in Abhängigkeit von dem festgestellten Wert des Ausgestaltungsparameters, wobei der durch das erzeugte Auftanksignal beschriebene Auftankparameter (bzw. dessen Wert) die Eigenschaft der Ausgestaltung berücksichtigt.

Gemäß dem erfindungsgemäßen Verfahren erfolgt ein Erzeugen eines Auftanksignals, das den ermittelten Auftankparameter beschreibt, der eine Einstellung der Auftankvorrichtung zum Befüllen der Kraftstofftankeinrichtung und/oder eine Einstellung der Kraftstofftankeinrichtung beschreibt. Der Auftankparameter kann beispielsweise eine Auftankgeschwindigkeit oder eine Soll-Temperatur eines Leitungssystems beschreiben. Durch die Auftankvorgangplanungseinrichtung erfolgt das Übertragen des erzeugten Auftanksignals an eine Steuereinrichtung der Auftankvorrichtung. Unter einer Steuereinrichtung wird dabei zum Beispiel ein Steuergerät oder ein Steuerchip verstanden.

Erfindungsgemäß kann optional vorgesehen sein, dass nicht nur ein Auftankparameter, sondern mehrere Auftankparameter ermittelt werden. Analog hierzu kann das Kraftstofftankparametersignal optional jeweils einen Wert zu mehreren Ausgestaltungsparametern beschreiben. Je mehr Ausgestaltungsparameter berücksichtigt werden, und je mehr Auftankparameter ermittelt werden, desto präziser kann der Auftankvorgang auf die individuelle Kraftstofftankeinrichtung des Kraftfahrzeugs zugeschnitten werden.

Der Auftankvorgang ist besonders präzise gestaltet, denn der Ausgestaltungsparameter ist eine Wandstärke eines Kraftstofftanks der Kraftstofftankeinrichtung, eine Abmessung einer Wand des Kraftstofftanks, oder ein Durchmesser der Wand ist. Diese Parameter können die Tanksymmetrie besonders gut beschreiben. Vorzugsweise kann der Ausgestaltungsparameter ein Verhältnis einer Tanklänge zu einem Tankdurchmesser beschreiben.

Optional kann das Kraftstofftankparametersignal einen Wert zu mindestens einem weiteren Ausgestaltungsparameter beschreiben, wobei der mindestens eine weitere Ausgestaltungsparameter zusätzlich beschreiben kann: eine Anzahl an Kraftstofftanks des Kraftfahrzeugs, eine thermische Eigenschaft einer Wand des Kraftstofftanks, oder eine thermische Masse eines Leitungssystems der Kraftstofftankeinrichtung; und wobei die Auftankvorgangplanungseinrichtung zu dem mindestens einen weiteren Ausgestaltungsparameter einen Auftankparameter ermittelt.

Optional können zusätzlich dynamische Daten berücksichtigt werden, die im Folgenden als physikalische Parameter oder dynamische Parameter bezeichnet werden. Gemäß dieser Ausführungsform des erfindungsgemäßen Verfahrens kann die Auftankvorgangplanungseinrichtung ein Kraftstofftankzustandsignal empfangen, vorzugsweise aus der Sendeeinrichtung des Kraftfahrzeugs, das einen Wert eines aktuellen physikalischen Parameters beschreiben kann, wobei der physikalische Parameter eine aktuelle, von der individuellen Ausgestaltung der Kraftstofftankeinrichtung unabhängige physikalische Größe beschreiben kann, vorzugsweise einen Druck oder eine Temperatur der Kraftstofftankeinrichtung. Als Druck wird dabei insbesondere ein Innendruck des Kraftstofftankeinrichtung verstanden. Alternativ oder zusätzlich kann zum Beispiel eine Eigenschaft einer Injektionsdüse berücksichtigt werden.

Vorzugsweise kann der Auftankparameter eine Soll-Temperatur des Kraftstoffes sein, und das erzeugte Auftanksignal kann ein Vorkühlen des Kraftstoffes auf die Soll-Temperatur beschreiben. Vorzugsweise kann dabei das Vorkühlen des Kraftstoffs auf die Soll-Temperatur vor dem Auftankvorgang erfolgen. Mit anderen Worten kann dabei eine Temperatur des Kraftstoffs justiert werden. Durch eine solche Vorkühlung wird eine Obergrenze der Tanktemperatur erst später erreicht, weswegen der Füllgrad erhöht wird. Die oben genannten Vorteile werden hierdurch also noch verstärkt. Beschreibt der Auftankparameter eine Soll-Temperatur eines Leitungssystems der Auftankvorrichtung und/oder eines Leitungssystems der Kraftstofftankeinrichtung, kann das erzeugte Auftanksignal ein Vorkühlen des Leitungssystems auf die Soll-Temperatur beschreiben. Auch hierdurch werden die oben genannten Vorteile synergetisch gefördert.

Das Empfangen des Kraftstofftankparametersignals kann vorzugsweise mittels eines Empfangsmoduls erfolgen, wobei das Empfangsmodul zur drahtlosen, nicht-optischen Datenkommunikation ausgestaltet und eingerichtet ist. Das Empfangsmodul kann dabei zum Beispiel ein Bestandteil der Auftankvorgangplanungseinrichtung sein, und zum Beispiel zur Datenübertragung über eine WLAN-Verbindung oder eine Bluetooth-Verbindung eingerichtet sein. Durch eine solche Kommunikation der Daten durch ein gesichertes und schnurloses Übertragungsmittel, kann die Auftankvorrichtung schneller, noch effizienter und günstiger Tanken. Im Gegensatz zu einer Datenübertragung mit einer Infrarot-Schnittstelle ist kein direkter Kontakt der Auftankvorrichtung mit dem Kraftfahrzeug notwendig, und die Datenübertragung funktioniert auch, falls eine entsprechende Schnittstelle am Kraftfahrzeug oder an der Auftankvorrichtung verschmutzt ist. Die Bauteile für eine solche Datenübertragung sind weniger empfindlich bei zum Beispiel Stößen oder falls solche Bauteile herunterfallen, also sehr viel robuster. Weiterhin können über eine solche Übertragung, also über die schnurlose, nicht-optische Datenübertragung, mehr Informationen übertragen werden, und es wird ein höheres Sicherheitsniveau erreicht. Das Kraftstofftankzustandsignal geht mit einer geringeren Wahrscheinlichkeit verloren, sodass sich in Kombination mit der Verwendung von statischen, tankspezifischen Daten ein synergistischer Effekt der Vorteile ergibt.

Mit anderen Worten basiert die Datenübertragung gemäß dieser Ausführungsform des erfindungsgemäßen Verfahrens auf einer Funk-basierten Datenübertragung, nicht auf einer optischen Datenübertragung. Ein weiterer Vorteil ergibt sich dadurch, dass eine Sendeeinheit des Kraftfahrzeugs nicht auf gleicher Höhe angebracht sein muss wie eine Empfangseinheit der Auftankvorrichtung.

Ein weiterer, schnurloser und nicht-optischer Datenübertragungsweg kann zum Beispiel eine Kommunikation mittels eines RFID-Chips sein, der zum Beispiel an einem Tankdeckel eines Kraftfahrzeugs angeordnet sein kann. An der Auftankvorrichtung kann dann ein entsprechendes Lesegerät oder Scanner angebracht sein.

Die oben gestellte Aufgabe wird gelöst durch eine Auftankvorgangplanungseinrichtung, die dazu eingerichtet ist, eine der oben beschriebenen Ausführungsformen des erfindungsgemäßen Verfahrens durchzuführen. Die Auftankvorgangplanungseinrichtung kann zum Beispiel als Steuerchip oder Steuergerät ausgestaltet sein. Beispielhaft kann die Auftankvorgangplanungseinrichtung ein Bauteil der Auftankvorrichtung sein, oder ein baulich davon getrenntes Gerät.

Die Auftankvorgangplanungseinrichtung kann vorzugsweise eine Prozessoreinrichtung aufweisen, also eine Gerätekomponente zur elektronischen Datenverarbeitung, die vorzugsweise wenigstens einen Mikrocontroller und/oder einen Mikroprozessor aufweisen kann. In einer Speichereinrichtung, die beispielsweise eine Speichereinrichtung der Auftankvorgangplanungseinrichtung sein kann, kann ein Programmcode abgelegt sein, der dazu ausgelegt ist, bei Ausführung durch die Prozessoreinrichtung die Auftankvorgangplanungseinrichtung dazu zu veranlassen, eine der oben beschriebenen Ausführungsformen des erfindungsgemäßen Verfahrens durchzuführen. Unter einer Speichereinrichtung wird dabei ein Datenspeicher verstanden, beispielsweise ein Speicherchip oder eine Festplatte.

Eine Weiterbildung der Auftankvorgangplanungseinrichtung kann ein Empfangsmodul zur drahtlosen, nicht-optischen Datenkommunikation aufweisen und dazu eingerichtet sein, das Kraftstofftankparametersignal über eine drahtlose, nicht-optische Datenkommunikation zu empfangen. Das Empfangsmodul kann beispielsweise als Lesegerät für RFID-Codes ausgestaltet sein, oder beispielsweise als Bluetooth-LE-Empfänger oder WLAN-Komponente. Es ergeben sich die bereits genannten Vorteile.

Die oben gestellte Aufgabe wird gelöst durch eine Auftankvorrichtung, die zum Beispiel als Tanksäule ausgestaltet sein kann. Die erfindungsgemäße Auftankvorrichtung weist eine Ausführungsform der erfindungsgemäßen Auftankvorgangplanungseinrichtung auf. Es ergeben sich die bereits genannten Vorteile.

Die oben gestellte Aufgabe wird gelöst durch ein Kraftfahrzeug, das eine Ausführungsform der erfindungsgemäßen Auftankvorgangplanungseinrichtung aufweist. Es ergeben sich die bereits genannten Vorteile.

Die Erfindung umfasst auch die Kombinationen der Merkmale der beschriebenen Ausführungsformen.

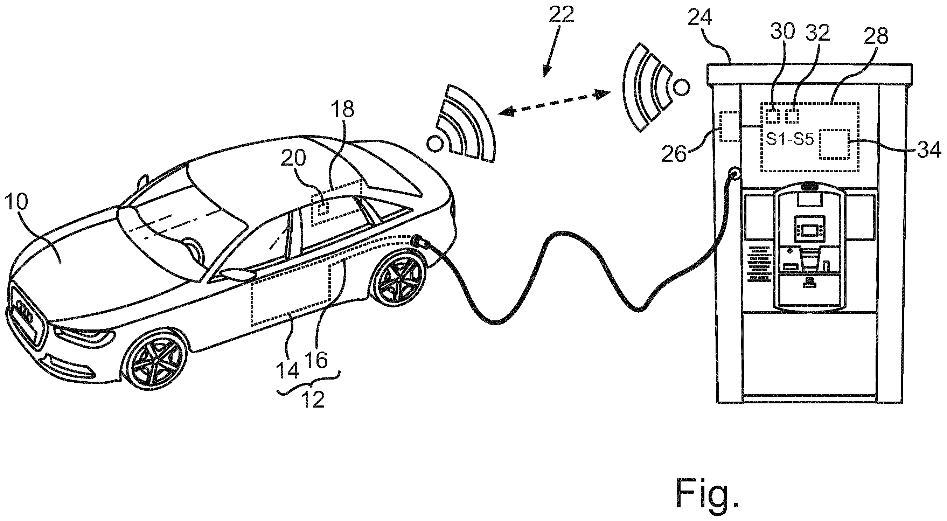

Im Folgenden sind Ausführungsbeispiele der Erfindung beschrieben. Hierzu zeigt die einzige Figur ("Fig.") eine schematische Darstellung zu einer Ausführungsform des erfindungsgemäßen Verfahrens und den erfindungsgemäßen Vorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die Fig. zeigt beispielhaft ein Kraftfahrzeug 10, das zum Beispiel als Brennstoffzellen-Kraftfahrzeug ausgestaltet sein kann. Eine Brennstoffzelle eines solchen Kraftfahrzeugs kann chemisch gebundene Energie in elektrische Energie umwandeln. Die so gewonnene elektrische Energie wird in Traktionsbatterien gespeichert. Mit einem Elektromotor wird die elektrische Energie wieder in Bewegungsenergie umgewandelt. Ein solches Kraftfahrzeug 10 kann zum Beispiel Wasserstoff oder Erdgas als Kraftstoff verbrennen. Die beispielhafte Kraftstofftankeinrichtung 12 des Kraftfahrzeugs 10 kann zum Beispiel einen Wasserstofftank als Kraftstofftank 14 und eine Zuleitung eines Leitungssystems 16 aufweisen. Der Kraftstofftank 14 kann dabei als dem Fachmann für diese Zwecke bekannter Kraftstoffbehälter ausgestaltet sein.

Das beispielhafte Kraftfahrzeug 10 in der Fig. kann ebenfalls zum Beispiel ein Steuergerät 18 aufweisen, das zum Beispiel eine Sendeeinheit 20 aufweisen kann, die zur drahtlosen und nicht-optischen, funkbasierten Datenkommunikation über eine Datenkommunikationsverbindung 22 ausgestaltet sein kann. Im Beispiel der Fig. kann die Datenkommunikationsverbindung 22 beispielsweise eine WLAN-Verbindung sein, oder zum Beispiel eine Bluetooth-LE-Verbindung.

Die Fig. zeigt ebenfalls eine beispielhafte Auftankvorrichtung 24, die zum Empfangen der Daten ein Empfangsmodul 26 aufweisen kann. Das Empfangsmodul 26 kann mit einer Auftankvorgangplanungseinrichtung 28 der Auftankvorrichtung 24 über beispielsweise eine kabelgebundene Datenkommunikationsverbindung (in der Fig. als schwarze Verbindungslinie gezeigt) verbunden sein, oder zum Beispiel eine Komponente der Auftankvorgangplanungseinrichtung 28 sein. Die Auftankvorgangplanungseinrichtung 28 kann beispielsweise als Steuergerät oder Steuerplatine ausgestaltet sein.

Alternativ kann die Datenkommunikation zum Beispiel über einen kraftfahrzeugexternen Datenserver (in der Fig. nicht gezeigt) erfolgen.

Die Auftankvorgangplanungseinrichtung 28 kann optional eine Prozessoreinrichtung 30 aufweisen, und/oder eine Speichereinrichtung 32, wobei auf der letzteren zum Beispiel eine Programmcode zum Durchführen des erfindungsgemäßen Verfahrens abgelegt sein kann.

Alternativ zum Beispiel der Fig. kann die Auftankvorgangplanungseinrichtung 28 zum Beispiel als externes Modul ausgestaltet sein, also zum Beispiel als Gerät mit einer entsprechenden Software, das sowohl kraftfahrzeugextern, als auch auftankvorrichtungsextern gebaut sein kann, das zum Beispiel in die Auftankvorrichtung 24 eingebaut werden kann. Alternativ kann die Auftankvorgangplanungseinrichtung 28 auch eine kraftfahrzeuginterne Auftankvorgangplanungseinrichtung 28 sein.

Ein durch die Auftankvorgangplanungseinrichtung 28 im Verfahrensschritt S2 empfangenes Kraftstofftankparametersignal kann zum Beispiel eine thermische Eigenschaft einer Wandung oder der Wände der Kraftstofftankeinrichtung 12 beschreiben und/oder eine thermische Masse des Leitungssystems 16. Alternativ oder zusätzlich kann das empfangene Kraftstofftankparametersignal eine Länge des Kraftstofftanks 14 und/oder einen Durchmesser des Kraftstofftanks 14 beschreiben. Optional kann das empfangene Kraftstofftankparametersignal zum Beispiel ein Material des Leitungssystems 16 beschreiben, zum Beispiel Stahl.

Optional kann die Auftankvorgangplanungseinrichtung 28 ein Verhältnis der beispielhaften Länge des Kraftstofftanks 14 zu einem Durchmesser des Kraftstofftanks 14 berechnen (S3), oder ein solches Verhältnis kann zum Beispiel bereits durch das Kraftstofftankparametersignal beschrieben sein. Die genannten, beispielhaften statischen Daten zu der Kraftstofftankeinrichtung 12 können zum Beispiel in dem Steuergerät 18 des Kraftfahrzeugs 10 hinterlegt sein. Bei dem beispielhaften Verhältnis der Länge des Kraftstofftanks 14 zu dem Durchmesser des Kraftstofftanks 14 ist zum Beispiel ein Quotient in einem Wertebereich von 1 bis 4 (inklusive der Grenzwerte) sehr günstig für das Betanken mit Wasserstoff, ein Verhältnis von über 4 jedoch weniger günstig.

Bisher wird zum Beispiel durch den Standard SAE J2601 ein Normwert von 5,5 Metern Leitungslänge vorgegeben, und ein Normwert eines externen Durchmessers von zehn Millimetern, sowie ein interner Durchmesser von 1,3 Millimetern. Gemäß dem Verfahren des Ausführungsbeispiels werden jedoch die exakten, individuellen Maße der Kraftstofftankeinrichtung 12 des Kraftfahrzeugs 10 verwendet, um den Auftankparameter zu ermitteln (S3). Ist beispielsweise das Leitungssystem 16 nur einen Meter lang oder zwei bis drei Meter lang und hat es einen geringeren Durchmesser, kann der Tankvorgang individueller gestaltet werden und dadurch kann der Füllgrad erhöht werden.

Als Auftankparameter kann beispielsweise eine Temperatur für eine Vorkühlung des Leitungssystems 16, eines Leitungssystems der Auftankvorrichtung 24 und/oder eine Vorkühlung des Kraftstoffs in der Auftankvorrichtung 24 ermittelt werden (S3). Alternativ oder zusätzlich kann bei einem Betanken mit Wasserstoff ein Druck- und Temperaturverhältnis ermittelt werden (S3).

Je länger die Auftankvorrichtung 24 vorgekühlt werden muss, das heißt je mehr thermische Masse zum Beispiel das Leitungssystem 16 und/oder der Kraftstofftank 14 aufweisen, desto weniger Kühlung des gasförmigen Kraftstoffs geht verloren. Im Gegensatz zu einer Normierung des Auftankparameters der Vorkühlung auf einen beispielhaften Normwert oder auf einen Schätzwert kann durch das Verfahren mit dem individuellen Ausgestaltungsparameter die Vorkühlung exakt abgestimmt werden, weswegen eine Auftankgeschwindigkeit erhöht werden kann.

Herrscht beispielsweise eine Außentemperatur von 40 Grad Celsius, kann bisher, also bei einer nicht-individuellen, immer gleichen Vorkühlung, die Auftankzeit zum Beispiel zehn Minuten betragen. Die Auftankgeschwindigkeit ist also deutlich reduzierter als beispielsweise bei 20 Grad Celsius, wo das Betanken in etwa zwei Minuten erfolgen kann.

Durch die individuelle Anpassung des Auftankparameters der beispielhaften Vorkühlung auf beispielsweise fünf Grad Celsius kann der Auftankvorgang für das Kraftfahrzeug 10 sehr schnell erfolgen. Im Beispiel der Fig. kann beispielsweise der Auftankvorgang in fünf Minuten erfolgen anstatt zum Beispiel zehn Minuten.

Um den Auftankvorgang individuell durchzuführen, erzeugt die Auftankvorgangplanungseinrichtung im Verfahrensschritt S4 ein Auftanksignal, das zum Beispiel die beschriebene Vorkühlung des Leitungssystems 16 beschreiben kann. Das Auftanksignal wird dann im Verfahrensschritt S5 an eine Steuereinrichtung 34 der Auftankvorrichtung 24 übertragen, die zum Beispiel als Steuerchip ausgestaltet sein kann. Die Steuereinrichtung 34 kann alternativ über eine Dantekommunikationsverbindung mit der Auftankvorgangplanungseinrichtung 28 gekoppelt sein und eine separate Komponente der Auftankvorrichtung 24 darstellen.

Werden zusätzliche dynamische Parameter berücksichtigt, zum Beispiel ein Anfangsdruck im Tank oder eine Anfangstemperatur der Auftankvorrichtung 24, können diese über ein Kraftstoffzustandssignal beschrieben sein, das von der Auftankvorgangplanungseinrichtung 28 empfangen werden kann (S5).

Insgesamt veranschaulichen die Beispiele, wie durch die Erfindung eine verbesserte Kommunikation mit einer Tankstelle für zum Beispiel Brennstoffzellen-Fahrzeuge ermöglicht wird.

Gemäß einem weiteren Ausführungsbeispiel kann durch das erfindungsgemäße Verfahren und die erfindungsgemäßen Vorrichtungen eine Kommunikation von Daten durch ein gesichertes oder sicheres, sowohl schnurloses Übertragungsmittel wie zum Beispiel WLAN, Bluetooth oder RFID ermöglicht werden. Dadurch, dass die Tankstelle weitere Informationen über das Tanksystem bekommen kann, kann die Auftankvorrichtung 24 schneller, effizienter und günstiger tanken. Beispielhafte Informationen können zum Beispiel eine Anzahl von Tanks sein, oder zum Beispiel eine Länge und/oder ein Durchmesser des Tanks, eine Wandstärke oder eine Leitungslänge. Eine solche drahtlose Kommunikation erlaubt es auch, dass die Auftankvorrichtung 24 sich vor der Betankung vorbereitet, um dann besser zu tanken.

Gemäß einem weiteren Ausführungsbeispiel, das zum Beispiel mit einem der anderen Ausführungsbeispiele kombiniert werden kann, werden durch die Kommunikation statische Daten übertragen, die spezifisch zur Tanksystemgeometrie und Eigenschaften des Tanks sind. Solche Daten sind einfacher zu sichern, zum Beispiel zu verschlüsseln, und können nahezu fehlerfrei der ohne Fehler übertragen werden. Wenn die Auftankvorrichtung 24, zum Beispiel eine Tankstelle, zum Beispiel alle Eigenschaften des Tanksystems kennt, also alle Eigenschaften der Kraftstofftankeinrichtung 12, kann sie auch ohne dynamische Informationen eine optimierte Betankung durchführen.

Optional können dynamische Daten berücksichtigt werden, vorzugsweise zum Beispiel Druck und/oder Temperatur oder Temperaturen im Tanksystem, also in der Kraftstofftankeinrichtung 12. Mit solchen zusätzlichen, optionalen Informationen kann die Betankung günstiger, effizienter, sicherer und schneller erfolgen.

Vorteilhaft kann durch eine Funk-basierte Übertragung eine optimierte drahtlose Betankung durch ein zuverlässiges Kommunikationssystem bereitgestellt werden. Durch eine sichere Authentifizierung und die Übertragung von festen Eigenschaften, also der statischen Daten, kann die Betankung sicher an den Tank justiert werden - was bisher mit Infrarot-Kommunikation der funkloser Kommunikation ohne Authentifizierung, mit Übertragung von meistens dynamische Daten, nicht möglich ist.

Vorteilhaft kann durch den Einbezug der statischen Daten, also der Eigenschaften der Kraftstofftankeinrichtung 12, zum Beispiel eine Vorkühlung des Kraftstoffs justiert werden, beispielsweise eine Wasserstoffvorkühlung, um Betriebskosten zu sparen - was bisher nicht möglich war aufgrund der vorgegebenen Sicherheitsmarge und der Vorgabe eines festen Temperaturfensters.

Weiterhin besteht durch das erfindungsgemäße Verfahren eine geringere Abhängigkeit von dynamischen Werten und man kann einen Füllgrad von 100 Prozent fast immer erreichen - was bisher durch Kommunikations-Fehlerfälle oder dynamische Werte mit Ungenauigkeiten nicht möglich war. Ein zusätzlicher Vorteil ist die Möglichkeit, eine Tankstelle zu bauen, die optimal gewisse Kraftfahrzeuge 10 betanken kann und deswegen muss die Tankstelle, beziehungsweise die Auftankvorrichtung 24, nicht überdimensioniert werden. Man kann dann zum Beispiel gewissen Kunden ein günstigeres und erweitertes Tankstellennetz anbieten.

Gemäß einem weiteren Ausführungsbeispiel kann eine beispielhafte technische Umsetzung vorsehen, dass das Kraftfahrzeug 10 seine Daten durch ein "Wireless"-System, also durch eine drahtlose Datenkommunikation, kommunizieren kann, das schon für andere Funktionen im Kraftfahrzeug 10 verbaut sein kann.

Die Auftankvorrichtung 24 der Tankstelle kann zum Beispiel zuerst statische Eigenschaften der Kraftstofftankeinrichtung 12, also des Tanksystems, bekommen und kann sich zum Beispiel vorbereiten, dieses Systems zu betanken. Wenn zum Beispiel der Betankungsvorgang anfängt, kann die Auftankvorrichtung 24 zusätzlich die dynamischen Daten vom Kraftfahrzeug 10 bekommen und kann die Betankung durchführen.

Die verschiedenen, beispielhaften Daten erlauben es der Auftankvorrichtung 24, die folgenden beispielhaften Parameter zu justieren:
Eine Geschwindigkeit, also eine Tankgeschwindigkeit, wodurch die Betankungszeit optimiert, vor allem reduziert werden kann; und/oder eine Vorkühlung, wodurch zum Beispiel ein Kraftstoffpreis gesenkt werden kann. Hierdurch kann ein Füllgrad von 100 Prozent oder nahezu 100 Prozent erreicht werden, wodurch die Reichweite des Kraftfahrzeugs 10 mit einer Tankfüllung deutlich erhöht wird. Außerdem wird die Sicherheit erhöht, insbesondere eine Datensicherheit.

Optional kann die Auftankvorgangplanungseinrichtung 28 als externes Modul bereitgestellt und zum Beispiel später in die Auftankvorrichtung 24 integriert werden.

Gemäß einem weiteren Ausführungsbeispiel kann das Verfahren aus folgenden Punkten bestehen oder die folgenden Punkte umfassen:
- Herstellung einer Kommunikation zwischen einer Auftankvorrichtung (24), zum Beispiel einer Wasserstoff- und/oder CNG-Tankstelle, und zum Beispiel einem gasgetriebenen Kraftfahrzeug (10);
- die Kommunikation kann drahtlos entstehen und kann am Kraftfahrzeug (10) und in einem Tankstelle-Modul so gebaut sein, dass sie eine sichere Authentifizierung erlaubt; die Daten vom Kraftfahrzeug (10) sind dann richtig und sind gesichert und können ohne Fehler an die Tankstelle übertragen werden;
- in diesem Sinn ist die Tankstelle sicher, was sie für einen System betanken will und kann sich auch kurz vor der Betankung vorbereiten;
- vorzugsweise kann eine Übertragung von detaillierten Eigenschaften vom Tanksystem erfolgen (zum Beispiel Volumen, Wandstärke, thermische Eigenschaften von den Wänden, thermische Masse vom Leitungssystem, Länge, Durchmesser vom Tank, Art der Injektionsdüse, und/oder Anfangs-Druck und Temperatur);
- mit dieser sicheren Übertragung von festen Daten kann die Tankstelle den Betankungsvorgang justieren, um schnell, günstig und sicher zu tanken;
- wenn die Betankung anfängt, können zusätzlich die normalen dynamische Daten übertragen werden, zum Beispiel Temperatur und Druck.

Dieses Kommunikationssystem bringt die oben genannten Vorteile und Neuigkeiten für zum Beispiel eine Wasserstoff-Betankung im Vergleich zu einem Vorgang/Protokoll aus dem Stand der Technik.

## Patentansprüche

1. Verfahren zum Steuern eines Auftankvorganges zum Befüllen einer Kraftstofftankeinrichtung (12) eines Kraftfahrzeugs (10) mit einem gasförmigen Kraftstoff, das Verfahren aufweisend die folgenden, durch eine Auftankvorgangplanungseinrichtung (28) durchgeführten Schritte:
- Empfangen eines Kraftstofftankparametersignals, das einen Wert eines Ausgestaltungsparameters beschreibt, der eine statische Eigenschaft der Kraftstofftankeinrichtung (12) in Bezug auf dessen individuelle Ausgestaltung beschreibt (S2),
- Ermitteln des Auftankparameters in Abhängigkeit von dem festgestellten Wert, wobei der durch das erzeugte Auftanksignal beschriebene Auftankparameter die Eigenschaft der Ausgestaltung berücksichtigt (S3),
- Erzeugen eines Auftanksignals, das den ermittelten Auftankparameter beschreibt, der eine Einstellung einer Auftankvorrichtung (24) zum Befüllen der Kraftstofftankeinrichtung (12) und/oder eine Einstellung der Kraftstofftankeinrichtung (12) beschreibt (S4), und
- Übertragen des erzeugten Auftanksignals an eine Steuereinrichtung (34) der Auftankvorrichtung (24, S5);
**dadurch gekennzeichnet, dass**
der Ausgestaltungsparameter ist: eine Wandstärke eines Kraftstofftanks, eine Abmessung einer Wand des Kraftstofftanks, oder ein Durchmesser einer Wand des Kraftstofftanks, oder ein Verhältnis einer Tanklänge zu einem Tankdurchmesser.

2. Verfahren nach Anspruch 1, wobei das Kraftstofftankparametersignal einen Wert zu mindestens einem weiteren Ausgestaltungsparameter beschreibt, wobei der mindestens eine weitere Ausgestaltungsparameter ist: eine Anzahl an Kraftstofftanks des Kraftfahrzeugs (10), eine thermische Eigenschaft einer Wand des Kraftstofftanks, oder eine thermische Masse eines Leitungssystems (16) der Kraftstofftankeinrichtung (12);
und wobei die Auftankvorgangplanungseinrichtung (28) zu dem mindestens einen weiteren Ausgestaltungsparameter einen Auftankparameter ermittelt (S3).

3. Verfahren nach einem der vorhergehenden Ansprüche, das Verfahren aufweisend die folgenden, durch die Auftankvorgangplanungseinrichtung (28) durchgeführten Schritte:
- Empfangen eines Kraftstofftankzustandsignals, das einen Wert eines aktuellen physikalischen Parameters beschreibt, der eine aktuelle, von der individuellen Ausgestaltung der Kraftstofftankeinrichtung (12) unabhängige physikalische Größe beschreibt, vorzugsweise einen Druck oder eine Temperatur der Kraftstofftankeinrichtung (12, S5).

4. Verfahren nach einem der vorhergehenden Ansprüche, **dadurch gekennzeichnet, dass**
der Auftankparameter eine Soll-Temperatur des Kraftstoffes ist, und das erzeugte Auftanksignal ein Vorkühlen des Kraftstoffes auf die Soll-Temperatur beschreibt.

5. Verfahren nach einem der vorhergehenden Ansprüche, **dadurch gekennzeichnet, dass**
der Auftankparameter eine Soll-Temperatur eines Leitungssystems (16) der Auftankvorrichtung (24) und/oder der Kraftstofftankeinrichtung (12) ist, und dass das erzeugte Auftanksignal ein Vorkühlen des Leitungssystems (16) auf die Soll-Temperatur beschreibt.

6. Verfahren nach einem der vorhergehenden Ansprüche, **dadurch gekennzeichnet, dass**
das Empfangen des Kraftstofftankparametersignals mittels eines Empfangsmoduls (26) zur drahtlosen, nicht-optischen Datenkommunikation erfolgt.

7. Auftankvorgangplanungseinrichtung (28), die dazu eingerichtet ist, ein Verfahren nach einem der Ansprüche durchzuführen.

8. Auftankvorgangplanungseinrichtung (28) nach Anspruch 7, die ein Empfangsmodul (26) zur drahtlosen, nicht-optischen Datenkommunikation aufweist und dazu eingerichtet ist, ein Verfahren nach Anspruch 6 durchzuführen.

9. Auftankvorrichtung (24), die durch eine Auftankvorgangplanungseinrichtung (28) nach Anspruch 7 oder 8 gekennzeichnet ist.

10. Kraftfahrzeug (10), das durch eine Auftankvorgangplanungseinrichtung (28) nach Anspruch 7 oder 8 gekennzeichnet ist.

## Claims

1. A method of controlling a refueling process for filling a fuel tank device (12) of a motor vehicle (10) with a gaseous fuel, the method comprising the following steps performed by a refueling process planning device (28):
- receiving of a fuel tank parameter signal, which describes a value of a design parameter describing a static property of the fuel tank device (12) with respect to its individual design (S2),
- determining the refueling parameter as a function of the determined value, wherein the refueling parameter described by the generated refueling signal considering the characteristic of the design (S3),
- generating a refueling signal, which describes the determined refueling parameter describing a setting of a refueling device (24) for filling the fuel tank device (12) and/or a setting of the fuel tank device (12) (S4), and
- transmitting the generated refueling signal to a control device (34) of the refueling device (24, S5);
**characterized in that**
the design parameter is: a wall thickness of a fuel tank, a dimension of a wall of the fuel tank, or a diameter of a wall of the fuel tank, or a ratio of a tank length to a tank diameter.

2. The method according to claim 1, wherein the fuel tank parameter signal describes a value to at least one further design parameter, wherein the at least one further design parameter is: a number of fuel tanks of the motor vehicle (10), a thermal property of a wall of the fuel tank, or a thermal mass of a conduit system (16) of the fuel tank device (12);
and wherein the refueling process planning device (28) determines a refueling parameter for the at least one further design parameter (S3).

3. The method according to any one of the preceding claims, the method comprising the following steps performed by the refueling process planning device (28):
- receiving a fuel tank condition signal describing a value of a current physical parameter that represents a current physical parameter dependent on the individual design of the fuel tank device (12), preferably a pressure or a temperature of the fuel tank device (12, S5).

4. The method according to any one of the preceding claims, **characterized in that** the refueling parameter is a set temperature of the fuel, and the generated refueling signal describes a precooling of the fuel to the set temperature.

5. The method according to any one of the preceding claims, **characterized in that** the refueling parameter is a set temperature of a pipeline system (16) of the refueling device (24) and/or of the fuel tank device (12), and **in that** the generated refueling signal describes a precooling of the pipeline system (16) to the set temperature.

6. The method according to any one of the preceding claims, **characterized in that** the fuel tank parameter signal is received by means of a receiving module (26) for wireless, non-optical data communication.

7. A refueling process planning device (28) configured to perform a method according to any one of the claims.

8. The refueling process planning device (28) according to claim 7, which comprises a receiver module (26) for wireless, non-optical data communication and which is adapted to perform a method according to claim 6.

9. A refueling device (24) **characterized by** a refueling process planning device (28) according to claim 7 or 8.

10. A motor vehicle (10) **characterized by** a refueling process planning device (28) according to claim 7 or 8.

## Revendications

1. Procédé de commande da'une opération de ravitaillement en carburant pour remplir un appareil réservoir de carburant (12) d'un véhicule automobile (10) avec un carburant sous forme gazeuse, le procédé présentant les étapes suivantes mises en œuvre par un appareil de planification d'opération de ravitaillement en carburant (28) consistant à :
- recevoir (S2) un signal de paramètre de réservoir de carburant qui décrit une valeur d'un paramètre de configuration qui décrit une propriété statique de l'appareil réservoir de carburant (12) par rapport à sa configuration individuelle,
- déterminer (S3) le paramètre de ravitaillement en carburant en fonction de la valeur déterminée, le paramètre de ravitaillement en carburant étant décrit par le signal de ravitaillement en carburant généré en tenant compte de la propriété de la configuration,
- générer (S4) un signal de ravitaillement en carburant qui décrit le paramètre de ravitaillement en carburant, qui décrit un réglage du dispositif de ravitaillement en carburant (24) pour remplir l'appareil réservoir de carburant (12) et/ou un réglage de l'appareil réservoir de carburant (12), et
- transférer (S5) le signal de ravitaillement en carburant généré à un appareil de commande (34) du dispositif de ravitaillement en carburant (24, S5) ;
**caractérisé en ce que**,
le paramètre de configuration est : une épaisseur de paroi d'un réservoir de carburant, une dimension d'une paroi du réservoir de carburant, ou un diamètre d'une paroi du réservoir de carburant, ou un rapport d'une longueur de réservoir à un diamètre de réservoir.

2. Procédé selon la revendication 1, dans lequel le signal de paramètre de réservoir de carburant décrit une valeur pour au moins un paramètre de configuration supplémentaire, le au moins un paramètre de configuration supplémentaire étant : un certain nombre de réservoirs de carburant du véhicule automobile (10), une propriété thermique d'une paroi du réservoir de carburant, ou une masse thermique d'un système de conduites (16) du réservoir de carburant (12) ;
et dans lequel l'appareil de planification d'opération de ravitaillement en carburant (28) détermine (S3) un paramètre de ravitaillement pour le au moins un paramètre de configuration supplémentaire.

3. Procédé selon l'une des revendications précédentes, le procédé présentant l'étape suivante mise en œuvre par l'appareil de planification d'opération de ravitaillement en carburant (28), consistant à :
- transférer un signal d'état de réservoir de carburant qui décrit une valeur d'un paramètre physique actuel qui décrit une grandeur physique actuelle qui est indépendante de la configuration individuelle de l'appareil réservoir de carburant (12), de préférence une pression ou une température de l'appareil réservoir de carburant (12, S5).

4. Procédé selon l'une quelconque des revendications précédentes, **caractérisé en ce que**
le paramètre de ravitaillement en carburant est une température cible du carburant, et le signal de ravitaillement en carburant généré décrit un prérefroidissement du carburant à la température cible.

5. Procédé selon l'une quelconque des revendications précédentes, **caractérisé en ce que**
le paramètre de ravitaillement en carburant est une température cible d'un système de conduites (16) du dispositif de ravitaillement en carburant (24) et/ou de l'appareil réservoir de carburant (12), et le signal de ravitaillement en carburant généré décrit un prérefroidissement du système de conduites (16) à la température cible.

6. Procédé selon l'une quelconque des revendications précédentes, **caractérisé en ce que**
le signal de paramètre de réservoir de carburant est reçu au moyen d'un module de réception (26) pour une communication de données sans fil non optique.

7. Appareil de planification d'opération de ravitaillement en carburant (28), qui est conçu pour exécuter un procédé selon l'une des revendications.

8. Appareil de planification d'opération de ravitaillement en carburant (28) selon la revendication 7, qui présente un module de réception (26) pour une communication de données sans fil non optique et qui est adapté pour exécuter un procédé selon la revendication 6.

9. Dispositif de ravitaillement en carburant (24) **caractérisé par** un appareil de planification d'opération de ravitaillement en carburant (28) selon la revendication 7 ou 8.

10. Véhicule automobile (10), **caractérisé par** un appareil de planification d'opération de ravitaillement en carburant (28) selon la revendication 7 ou 8.
